# EUROPEAN PATENT APPLICATION

(11) **EP 2 511 763 A2**
(43) Date of publication of application: **17.10.2012**
(21) Application number: 11190648.3
(22) Date of filing: 24.11.2011
(51) Int. Cl.: G03B 35/00

(54) **Display systems and methods with anti-eavesdropping function**

(30) Priority: 30.03.2011 TW 100110963
(71) Applicant: Acer Incorporated, Taipei Hsien 221 (TW)
(72) Inventor: Yu, Pei-Ling, 221 Taipei (TW); Lin, Tzu-Chieh, 221 Taipei (TW); Lin, Szu-Wen, 211 Taipei (TW)
(74) Representative: Quiram, Guido

(57) **Abstract**

Display systems and methods with anti-eavesdropping function are provided. A glass and a display device are coupled. The glass has a right eye viewing component and a left eye viewing component. The display device alternately displays a real picture and a fake picture, and provides at least one control signal to the glass. The control signal triggers the right eye viewing component and the left eye viewing component of the glass to respectively switch between an open state and a closed state.

## Description

### CROSS REFERENCE TO RELATED APPLICATIONS

This Application claims priority of Taiwan Patent Application No. 100110963, filed on March 30, 2011, the entirety of which is incorporated by reference herein.

### BACKGROUND OF THE INVENTION

### Field of the Invention

The disclosure relates generally to display systems and methods, and, more particularly to display systems and methods with an anti-eavesdropping function using a display device and a glass.

### Description of the Related Art

Generally, users can view content, such as multimedia or network data via display devices. In some cases, when a user wants to view confidential data or authorized contents, the display device must deploy anti-eavesdropping technology, to prevent content displayed on the display device from being viewed by other users.

Conventionally, an anti-eavesdropping film can be placed on the screen of the display device, thus preventing content displayed on the display device from being viewed by other users. However, since the anti-eavesdropping film still has a visible angle of 60°, users who stand within a 30°range of a front viewpoint of a screen, can still see the content displayed on the display device. Additionally, since the anti-eavesdropping film will decrease brightness of a screen, only users who are positioned an upright front position of the screen can view brightness which is close to the original brightness of the screen. Once users leave the central position in front of the screen, brightness of the screen will correspondingly decrease. Further, when several users want to view the screen together, the anti-eavesdropping film must be manually removed from the screen, and after that, the anti-eavesdropping film must be manually installed to the screen again. This is inconvenient for users.

### BRIEF SUMMARY OF THE INVENTION

Display systems and methods with an anti-eavesdropping function are provided.

An embodiment of a display system with an anti-eavesdropping function includes a glass and a display device coupled to the glass. The glass has a right eye viewing component and a left eye viewing component. The display device alternately displays a real picture and a fake picture, and provides at least one control signal to the glass. The control signal triggers the right eye viewing component and the left eye viewing component of the glass to respectively switch between an open state and a closed state.

In an embodiment of a display method with an anti-eavesdropping function, a real picture and a fake picture are alternately displayed via a display device, and at least one control signal is provided to a glass via the display device. The control signal triggers a right eye viewing component and a left eye viewing component of the glass to respectively switch between an open state and a closed state.

In some embodiments, the display device can display a first real picture, and provide a first control signal to the glass, wherein the first control signal triggers the right eye viewing component and the left eye viewing component of the glass to simultaneously switch to the open state. Then, the display device can display a first fake picture, and provide a second control signal to the glass, wherein the second control signal triggers the right eye viewing component and the left eye viewing component of the glass to simultaneously switch to the closed state. In some embodiments, the display device can display a second real picture, and provide a third control signal to the glass, wherein the third control signal triggers the right eye viewing component and the left eye viewing component of the glass to simultaneously switch to the open state.

In some embodiments, the display device can display a right eye real picture, and provide a first control signal to the glass, wherein the first control signal triggers the right eye viewing component of the glass to switch to the open state, and triggers the left eye viewing component of the glass to switch to the closed state. Then, the display device can display a first fake picture, and provide a second control signal to the glass, wherein the second control signal triggers the right eye viewing component and the left eye viewing component of the glass to simultaneously switch to the closed state. Thereafter, the display device can display a left eye real picture, and provide a third control signal to the glass, wherein the third control signal triggers the left eye viewing component of the glass to switch to the open state, and triggers the right eye viewing component of the glass to switch to the closed state. In some embodiments, the display device can display a second fake picture, and provide a fourth control signal to the glass, wherein the fourth control signal triggers the right eye viewing component and the left eye viewing component of the glass to simultaneously switch to the closed state.

In some embodiments, the fake picture may be a white picture, or a specific picture which is enough to generate a persistence of vision and a shielding efficiency.

Display methods with an anti-eavesdropping function may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a display system with an anti-eavesdropping function of the invention;

Fig. 2 is a flowchart of an embodiment of a display method with an anti-eavesdropping function of the invention;

Fig. 3 is a flowchart of another embodiment of a display method with an anti-eavesdropping function of the invention;

Fig. 4 is a schematic diagram illustrating a display procedure with an anti-eavesdropping function of the embodiment in Fig. 3;

Fig. 5 is a flowchart of another embodiment of a display method with an anti-eavesdropping function of the invention; and

Fig. 6 is a schematic diagram illustrating a display procedure with an anti-eavesdropping function of the embodiment in Fig. 5.

### DETAILED DESCRIPTION OF THE INVENTION

Display systems and methods with an anti-eavesdropping function are provided.

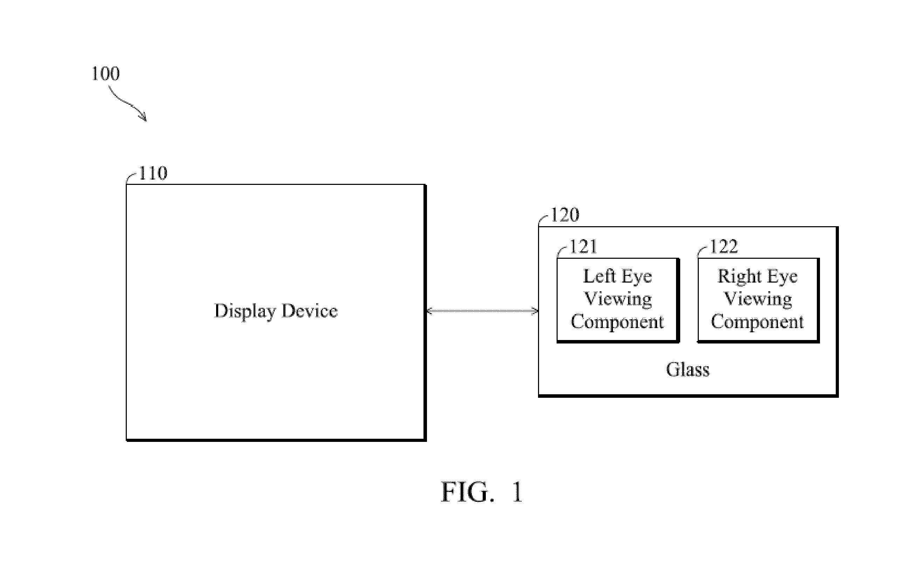

Fig. 1 is a schematic diagram illustrating an embodiment of a display system with an anti-eavesdropping function of the invention.

The display system with an anti-eavesdropping function 100 comprises a display device 110 and a glass 120. The display device 110 and the glass 120 are coupled with each other. The display device 110 can display pictures, and provide control signals to the glass 120. The glass 120 has a left eye viewing component 121 and a right eye viewing component 122. The viewing component may be an eyeglass which can be opened or closed. The glass 120 can drive the left eye viewing component 121 and the right eye viewing component 122 to respectively switch between an open state and a closed state according to the control signals received from the display device 110. It is understood that, when the viewing component is in the open state, users can see the picture displayed in the screen via the viewing component. When the viewing component is in the closed state, users cannot see the picture displayed in the screen via the viewing component.

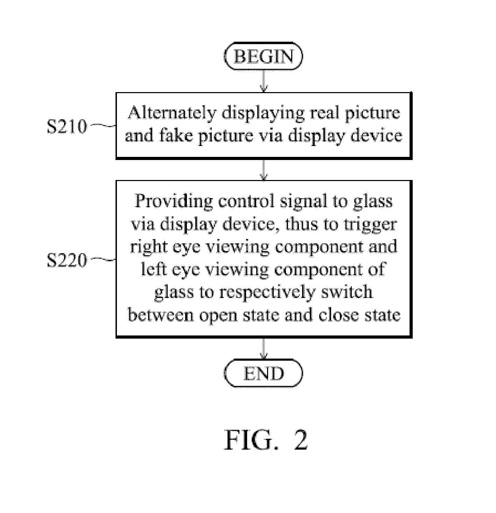

Fig. 2 is a flowchart of an embodiment of a display method with an anti-eavesdropping function of the invention.

In step S210, a real picture and a fake picture are alternately displayed via a display device. It is understood that, the real picture is the content expected to be provided to users. In some embodiments, the fake picture may be a white picture, or a specific picture which is enough to generate a persistence of vision and a shielding efficiency. During the display of pictures, in step S220, at least one control signal is provided to a glass via the display device. The control signal triggers the right eye viewing component and the left eye viewing component of the glass to respectively switch between an open state and a closed state. It is noted that, when the display device displays a real picture, the control signal can trigger the right eye viewing component and/or the left eye viewing component of the glass to switch to the open state. When the display device displays a fake picture, the control signal can trigger the right eye viewing component and/or the left eye viewing component of the glass to switch to the closed state.

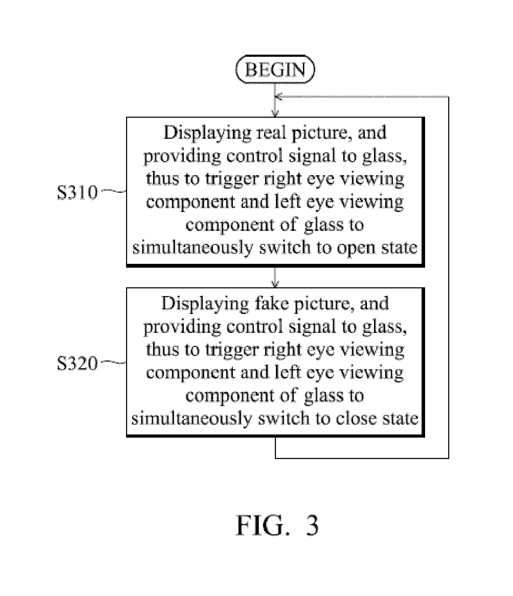

Fig. 3 is a flowchart of another embodiment of a display method with an anti-eavesdropping function of the invention. In the embodiment, only the user who wears the glass can see real pictures.

In step S310, a real picture is displayed via a display device, and a control signal is provided to a glass via the display device, wherein the control signal triggers the right eye viewing component and the left eye viewing component of the glass to simultaneously switch to the open state. Similarly, the real picture is the content expected to be provided to users. It is noted that, at this time, the user who wears the glass can see the real picture. In step S320, a fake picture is displayed via the display device, and a control signal is provided to the glass, wherein the control signal triggers the right eye viewing component and the left eye viewing component of the glass to simultaneously switch to the closed state. Similarly, in some embodiments, the fake picture may be a white picture, or a specific picture which is enough to generate a persistence of vision and a shielding efficiency. It is noted that, at this time, the user who wears the glass will not see the fake picture. Thereafter, steps S310 and S320 are repeated until all real pictures have been displayed.

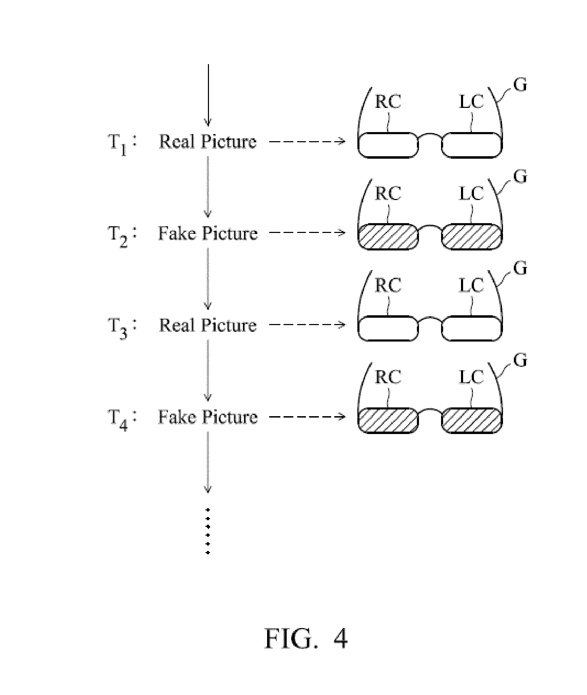

Fig. 4 is a schematic diagram illustrating a display procedure with an anti-eavesdropping function of the embodiment in Fig. 3. As shown in Fig. 4, at time T1, the display device displays a real picture, and at this time, the display device outputs a control signal to the glass G, thus to control the right eye viewing component RC and the left eye viewing component LC to simultaneously switch to the open state. At time T2, the display device displays a fake picture, and at this time, the display device outputs a control signal to the glass G, thus to control the right eye viewing component RC and the left eye viewing component LC to simultaneously switch to the closed state. Repeatedly, at time T3, the display device displays a real picture, and at this time, the display device outputs a control signal to the glass G, thus to control the right eye viewing component RC and the left eye viewing component LC to simultaneously switch to the open state. At time T4, the display device displays a fake picture, and at this time, the display device outputs a control signal to the glass G, thus to control the right eye viewing component RC and the left eye viewing component LC to simultaneously switch to the closed state. Similar procedures are repeated. It is understood that, when the real pictures are displayed, the two viewing components of the glass are both in the open state, and when the fake pictures are displayed, the two viewing components of the glass are both in the closed state. Since the user who wears the glass only sees the real pictures, the real pictures can be clearly viewed. The user who isn't wearing the glass will see both the real pictures and fake pictures. Due to effects of the persistence of vision and the shielding efficiency, the user who isn't wearing the glass will only notice the fake pictures, such as white pictures, thereby achieving the objective of anti-eavesdropping.

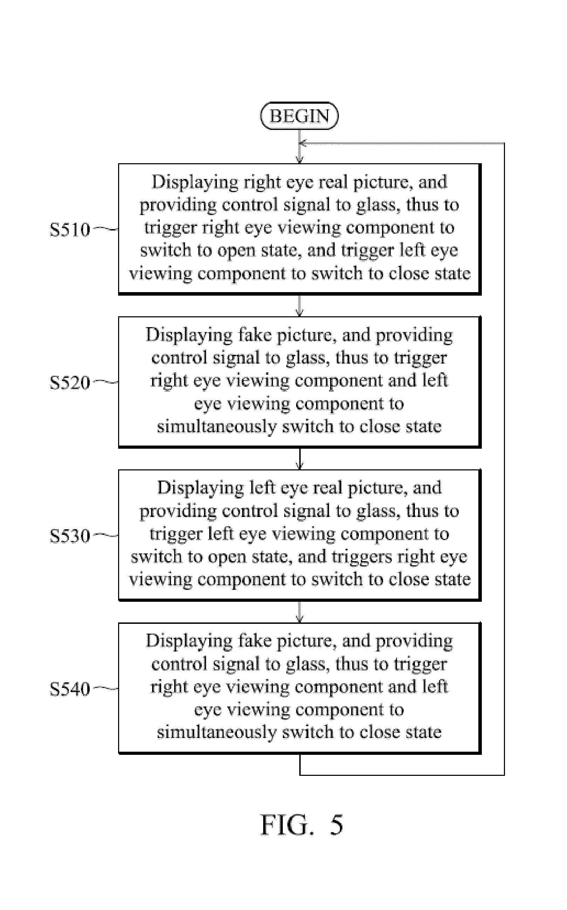

Fig. 5 is a flowchart of another embodiment of a display method with an anti-eavesdropping function of the invention. In the embodiment, a user who wears the glass can see 3D real pictures, and the user who isn't wearing the glass cannot see the real pictures.

In step S510, a right eye real picture is displayed via a display device, and a control signal is provided to the glass via the display device, wherein the control signal triggers the right eye viewing component of the glass to switch to the open state, and triggers the left eye viewing component of the glass to switch to the closed state. It is noted that, at this time, the user who wears the glass can see the right eye real picture. Then, in step S520, a fake picture is displayed via the display device, and a control signal is provided to the glass via the display device, wherein the control signal triggers the right eye viewing component and the left eye viewing component of the glass to simultaneously switch to the closed state. Similarly, in some embodiments, the fake picture may be a white picture, or a specific picture which is enough to generate a persistence of vision and a shielding efficiency. It is noted that, at this time, the user who wears the glass will not see the fake picture. Then, in step S530, a left eye real picture is displayed via the display device, and a control signal is provided to the glass via the display device, wherein the control signal triggers the left eye viewing component of the glass to switch to the open state, and triggers the right eye viewing component of the glass to switch to the closed state. It is noted that, at this time, the user who wears the glass can see the left eye real picture. It is understood that, 3D viewing effect can be provided by using the right eye real picture and the left eye real picture. Then, in step S540, a fake picture is displayed again via the display device, and a control signal is provided to the glass via the display device, wherein the control signal triggers the right eye viewing component and the left eye viewing component of the glass to simultaneously switch to the closed state. Thereafter, steps S510 to S540 are repeated until all real pictures have been displayed.

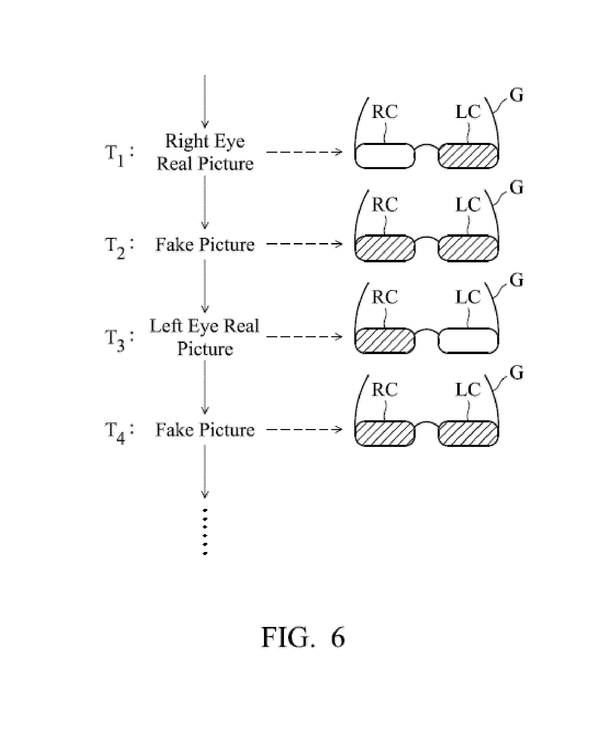

Fig. 6 is a schematic diagram illustrating a display procedure with an anti-eavesdropping function of the embodiment in Fig. 5. As shown in Fig. 6, at time T1, the display device displays a right eye real picture, and at this time, the display device outputs a control signal to the glass G, thus to control the right eye viewing component RC to switch to the open state, and control the left eye viewing component LC to switch to the closed state. At time T2, the display device displays a fake picture, and at this time, the display device outputs a control signal to the glass G, thus to control the right eye viewing component RC and the left eye viewing component LC to simultaneously switch to the closed state. Then, at time T3, the display device displays a left eye real picture, and at this time, the display device outputs a control signal to the glass G, thus to control the right eye viewing component RC to switch to the closed state, and control the left eye viewing component LC to switch to the open state. At time T4, the display device displays a fake picture, and at this time, the display device outputs a control signal to the glass G, thus to control the right eye viewing component RC and the left eye viewing component LC to simultaneously switch to the closed state. Similar procedures are repeated. It is understood that, the display device will display pictures according to a sequence of a right eye real picture, a fake picture, a left eye real picture, and a fake picture, and the glass will synchronously work with the display device based the control signals. The right eye and the left eye of a user can receive different real pictures, thus to generate 3D viewing effects. The user who isn't wearing the glass will see both the real pictures and fake pictures. Due to effects of the persistence of vision and the shielding efficiency, the user who isn't wearing the glass cannot clearly see the real pictures, thereby achieving the objective of anti-eavesdropping.

Therefore, the display systems and methods can provide display management operations with an anti-eavesdropping function using the original display devices and the glasses of the invention.

Display methods with an anti-eavesdropping function, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A display system with anti-eavesdropping function, comprising:
a glass comprising a right eye viewing component and a left eye viewing
component; and
a display device coupled to the glass, alternately displaying a real picture and a
fake picture, and providing at least one control signal to the glass, wherein the control signal triggers the right eye viewing component and the left eye viewing component of the glass to respectively switch between an open state and a closed state.

2. The system of claim 1, wherein the display device displays a first real picture, and provides a first control signal to the glass, wherein the first control signal triggers the right eye viewing component and the left eye viewing component of the glass to simultaneously switch to the open state, and the display device displays a first fake picture, and provides a second control signal to the glass, wherein the second control signal triggers the right eye viewing component and the left eye viewing component of the glass to simultaneously switch to the closed state.

3. The system of claim 2, wherein the display device further displays a second real picture, and provides a third control signal to the glass, wherein the third control signal triggers the right eye viewing component and the left eye viewing component of the glass to simultaneously switch to the open state.

4. The system of claim 1, wherein the display device displays a right eye real picture, and provides a first control signal to the glass, wherein the first control signal triggers the right eye viewing component of the glass to switch to the open state, and triggers the left eye viewing component of the glass to switch to the closed state, the display device displays a first fake picture, and provides a second control signal to the glass, wherein the second control signal triggers the right eye viewing component and the left eye viewing component of the glass to simultaneously switch to the closed state, and the display device displays a left eye real picture, and provides a third control signal to the glass, wherein the third control signal triggers the left eye viewing component of the glass to switch to the open state, and triggers the right eye viewing component of the glass to switch to the closed state.

5. The system of claim 4, wherein the display device further displays a second fake picture, and provides a fourth control signal to the glass, wherein the fourth control signal triggers the right eye viewing component and the left eye viewing component of the glass to simultaneously switch to the closed state.

6. The system of claim 1, wherein the fake picture is a white picture, or a specific picture which is enough to generate a persistence of vision and a shielding efficiency.

7. A display method with anti-eavesdropping function, comprising:
alternately displaying a real picture and a fake picture via a display device; and
providing at least one control signal to a glass via the display device, wherein
the control signal triggers a right eye viewing component and a left eye viewing component of the glass to respectively switch between an open state and a closed state.

8. The method of claim 7, further comprising:
displaying a first real picture, and providing a first control signal to the glass
via the display device, wherein the first control signal triggers the right eye viewing component and the left eye viewing component of the glass to simultaneously switch to the open state; and
displaying a first fake picture, and providing a second control signal to the
glass via the display device, wherein the second control signal triggers the right eye viewing component and the left eye viewing component of the glass to simultaneously switch to the closed state.

9. The method of claim 8, further comprising displaying a second real picture, and providing a third control signal to the glass via the display device, wherein the third control signal triggers the right eye viewing component and the left eye viewing component of the glass to simultaneously switch to the open state.

10. The method of claim 7, further comprising:
displaying a right eye real picture, and providing a first control signal to the
glass via the display device, wherein the first control signal triggers the right eye viewing component of the glass to switch to the open state, and triggers the left eye viewing component of the glass to switch to the closed state;
displaying a first fake picture, and providing a second control signal to the
glass via the display device, wherein the second control signal triggers the right eye viewing component and the left eye viewing component of the glass to simultaneously switch to the closed state; and
displaying a left eye real picture, and providing a third control signal to the
glass via the display device, wherein the third control signal triggers the left eye viewing component of the glass to switch to the open state, and triggers the right eye viewing component of the glass to switch to the closed state.

11. The method of claim 10, further displaying a second fake picture, and providing a fourth control signal to the glass via the display device, wherein the fourth control signal triggers the right eye viewing component and the left eye viewing component of the glass to simultaneously switch to the closed state.

12. The method of claim 1, wherein the fake picture is a white picture, or a specific picture which is enough to generate a persistence of vision and a shielding efficiency.

13. A machine-readable storage medium comprising a computer program, which, when executed, causes a device to perform a display method with anti-eavesdropping function, wherein the method comprises:
alternately displaying a real picture and a fake picture; and
providing at least one control signal to a glass, wherein the control signal
triggers a right eye viewing component and a left eye viewing component of the glass to respectively switch between an open state and a closed state.
